# EUROPÄISCHE PATENTANMELDUNG

(11) **EP 3 435 024 A1**
(43) Veröffentlichungstag der Anmeldung: **30.01.2019**
(21) Anmeldenummer: 18181841.0
(22) Anmeldetag: 05.07.2018
(51) Int. Cl.: G01B 7/28, G01B 7/315, G01M 17/013, G01P 3/00, G01P 3/487, B62J 99/00

(54) **VERFAHREN UND VORRICHTUNG ZUR ÜBERWACHUNG DER BEWEGUNG EINES RADES EINES ZWEIRADS**

(30) Priorität: 27.07.2017 DE 102017212903
(71) Anmelder: Robert Bosch GmbH, 70442 Stuttgart (DE)
(72) Erfinder: Stegmaier, Juergen, 72074 Tuebingen (DE); Dackermann, Tim, 72072 Tuebingen (DE); Greiner, Rinaldo, 72762 Reutlingen (DE); Schnee, Jan, 71093 Weil Im Schoenbuch (DE)

(57) **Zusammenfassung**

Die Erfindung betrifft ein Verfahren sowie eine Vorrichtung zur Überwachung der Radbewegung eines Zweirads sowie ein Zweirad, insbesondere ein Fahrrad mit einer entsprechenden Vorrichtung.
Ein Magnet wird am Rad befestigt, ein dem Rahmen zugeordneter Magnetfeldsensor erfasst Magnetfeldkomponenten in mindestens zwei Raumrichtungen.
Die bei einem fehlerfreien Rad erfassten Magnetfeldsignale werden abgespeichert, das aktuelle Magnetfeldsignal wird mit den abgespeicherten Werten verglichen.
Bei einer Abweichung in mindestens einer Raumrichtung, die über einem Schwellwert liegt, wird ein Radfehler signalisiert.
Als Radfehler können ein Seitenschlag oder Achter, ein Höhenschlag oder eine falsche Radeinspannung erkannt werden.

## Beschreibung

Die Erfindung betrifft ein Verfahren sowie eine Vorrichtung zur Überwachung der Radbewegung eines Zweirads sowie ein Zweirad, insbesondere ein Fahrrad mit einer entsprechenden Vorrichtung.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, bei dem die Drehung der Fahrradreifen erfasst wird. Dabei sind die Raddrehzahlsensoren als Magnetsensoren beispielsweise ortsfest an der Vorderradgabel vorgesehen, die bei jedem Durchlauf eines Magneten an der Speicher einen Impuls liefern. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation. Auch die Erfassung der Orientierung des Rades bzw. dessen dynamisches Verhalten sowohl seitlich als auch senkrecht zur Fahrtrichtung ist aus dieses Signalen nicht ableitbar.

Als Alternative können Beschleunigungssensoren verwendet werden, die ebenfalls eine Geschwindigkeitsinformation erzeugen können. Zusätzlich können durch derartige Beschleunigungssensoren auch die Bewegung seitlich zur Fahrtrichtung sowie senkrecht dazu erfasst werden, um beispielsweise die Lenkrichtung abzuleiten. Der Betrieb derartiger Beschleunigungssensoren ist jedoch energieaufwändiger, so dass diese Art der Erfassung eher bei elektrifizierten Fahrzeugen zum Einsatz kommt.

Mit der vorliegenden Erfindung wird ein System beschrieben, bei dem mittels der Erfassung von Sensorsignalen eines Magnetsensors auf die Einbaulage bzw. Orientierung eines Rades geschlossen werden kann.

### Offenbarung der Erfindung

Mittels der vorliegenden Erfindung wird ein Verfahren sowie eine Vorrichtung zur Überwachung der Drehbewegung eines Rades eines Zweirads sowie ein mit einer entsprechenden Vorrichtung ausgestattetes Zweirad beansprucht. Bei dem Zweirad kann es sich dabei beispielsweise um ein Fahrrad oder ein Elektrofahrrad handeln.

Das Zweirad, bei dem das Verfahren zur Überwachung des Bewegungsverhaltens wenigstens eines Rades angewandt werden soll, weist wenigstens dieses eine Rad mit einem daran oder darin befindlichen Magneten sowie einen am Rahmen des Fahrrads befestigten oder mit diesem in sonstiger Weise gekoppelten Magnetsensor auf. Durch die direkte oder indirekte ortsfeste Fixierung des Magnetsensors an den Rahmen können die Bewegungen des Rades in Relation zum übrigen starren Fahrradaufbau erfasst und ausgewertet werden.

Zur Überwachung des Bewegungsverhaltens des wenigstens einen Rades werden die Magnetfeldsensorsignale des wenigstens einen Magneten in dem überwachten Rad während seiner Drehbewegung erfasst. Durch die (Dreh-) Bewegung des Rades in einer Ebene bestehend aus der Richtung der Hochachse y und der Fortbewegungsrichtung x des Zweirads kann der Magnetfeldsensor somit die Magnetfeldkomponenten der Magnetfeldsensorsignale in wenigstens zwei Raumrichtungen voneinander unterscheiden. Anschließend werden die so erfassten Magnetfeldsensorsignale mit abgespeicherten Vergleichswerten, z.B. ebenfalls Magnetfeldsensorsignalen, verglichen. Wird bei diesem Vergleich ein ausreichend großer Unterschied festgestellt, d.h. sind die Abweichungen zwischen den erfassten und den abgespeicherten Magnetfeldsensordaten bzw. den Vergleichswerten ausreichend groß, so dass sie einen vorgegebenen Schwellenwert überschreiten, kann eine Abweichung und somit ein Fehler in der Drehbewegung des Rades erkannt werden. Sobald ein Fehler in der Drehbewegung aufgrund der Analyse bzw. des Vergleichs der erfassten mit zuvor ermittelten oder abgespeicherten Magnetfeldsensorsignalen festgestellt wird, wird eine Radfehlerinformation erzeugt, die entweder ausgegeben oder an eine Verarbeitungseinheit weitergegeben werden kann. Basierend auf dieser Radfehlerinformation kann der Fahrer des Zweirads den Schaden oder den unsachgemäßen Einbau des Rades korrigieren.

Mit diesem erfindungsgemäßen Verfahren bzw. einer Vorrichtung, die dieses Verfahren ausführt, kann eine Beschädigung oder eine fehlerhafte Befestigung des Rades erkannt werden. Hierdurch können sowohl Unfälle als auch ein unnötiger Materialverschleiß vermieden werden. Weiterhin kann durch eine Erkennung einer fehlerhaften Bewegung des Rades mit nachfolgender Korrektur bzw. Reparatur ein energetisch optimierter Betrieb des Zweirads ermöglicht werden.

Besonders vorteilhaft ist es, wenn die Überwachung die Abweichung der Magnetfeldsensorsignale jeweils getrennt nach den Raumrichtungen durchführt, ggf. unter Verwendung unterschiedlicher Schwellenwerte. Weiterhin ist es möglich, die Erkennung des Fehlers in der Drehbewegung bzw. die Erzeugung der Radfehlerinformation abhängig vom Eintritt bestimmter Voraussetzungen in wenigstens zwei voneinander unterschiedlichen Raumrichtungen zu machen. So ist denkbar, dass Änderungen im Drehverhalten in unterschiedlichen Raumrichtungen zu unterschiedlichen Fehlerbestimmungen im Drehverhalten des Rades führen.

Der Vergleich erfolgt dabei in einer ersten Varianten, je nach Raumrichtung getrennt, indem abgespeicherte Vergleichswerte, z.B. Magnetfeldsensorsignale, die bei einer Eichung im ordnungsgemäßen Einbauzustand des überwachten Rades erzeugt worden sind, als Vergleichsmaßstab herangezogen werden. In einer zweiten Varianten werden, ebenfalls nach Raumrichtung getrennt, die erfassten Magnetfeldsensorsignale abgespeichert und mit den nachfolgend erfassten Magnetfeldsensorsignalen verglichen. Wird dabei lediglich nur ein Magnet in dem überwachten Rad verwendet, ist vorteilhafterweise darauf zu achten, dass wenigstens ein Umlauf des Rades für die Eichung, die Erfassung oder die Erzeugung der abgespeicherten Vergleichsmagnetfeldsensorsignale vorliegt. Sind dagegen mehrere Magnete in dem überwachten Rad vorhanden, reichen je nach Fehlerfall der Drehbewegung auch aufeinander folgende Magnetfeldsensorsignale. In diesem Fall kann das aktuell erfasste Magnetfeldsensorsignal mit dem direkt zuvor oder mit einem der zuvor erfassten und abgespeicherten Magnetfeldsensorsignale verglichen werden.

Der Vergleich der Magnetfeldsensorsignale kann über die Betrachtung der Amplitude, der Peakform, der Peakhöhe, der Maximalwerte, des Messwertintegrals (über einen Umlauf oder einen Messwertpeak) sowie der Anzahl der Peaks innerhalb der Magnetfeldsensorsignale erfolgen. Die Abweichung wird dabei üblicherweise als Unterschied oder Differenz ermittelt.

Wie bereits ausgeführt, werden die Magnetfeldsensorsignale mit wenigstens zwei Komponenten erfasst, die zwei der drei Raumrichtungen entsprechen. Hierbei kann es sich um die Richtung der Bewegungsrichtung, der Hochachse y und/oder der Querrichtung z des Zweirads handeln. Diese unterschiedlichen Komponenten können sowohl jeweils mit einem eigenen Magnetfeldsensor erfasst werden oder gemeinsam mit einem einzelnen Magnetfeldsensor.

Ausgehend von den verschiedenen Magnetfeldkomponenten der Magnetfeldsensorsignale kann die Art des Fehlers der Drehbewegung des Rades erkannt werden. So kann beispielsweise auf einen Höhenschlag des Rades, d.h. ein oval geformtes Rad, geschlossen werden, wenn die Abweichung der Magnetfeldsensorsignal in Richtung der Hochachse y und/oder in Richtung der Bewegungsrichtung x des Zweirads einen ersten Schwellenwert überschreitet. Entsprechend kann eine Messwertkomponente des Magnetfeldsensorsignals in Querrichtung z des Zweirads auf einen Seitenschlag oder eine falsche Radeinspannung, d.h. einen Versatz zwischen Rad und Tretkurbelwelle, hindeuten. Um bei diesen Fehlerarten eine eindeutige Abgrenzung zu erreichen, wird in einem ersten Schritt geprüft, inwieweit die Magnetfeldsensorsignale Bz in Querrichtung z überhaupt ausreichend sind, um ein Signal in dieser Richtung zu erzeugen. Dabei wird verglichen, ob die Magnetfeldsensorkomponente Bz des Magnetfeldsensorsignals einen dritten oder sechsten Schwellenwert überschreitet. In einer besonderen Ausgestaltung der Erfindung können der dritte und der sechste Schwellenwert auch gleich oder annähernd gleich sein. Wird einer dieser beiden Schwellenwerte überschritten, ist die Bewegung der Drehung des Rads in z-Richtung ausreichend, um als Fehlbewegung erkannt zu werden.

Bei einem Seitenschlag, d.h. einem "Achter" ist jedoch nur ein Teil des Umfangs des Rades betroffen, so dass die Bz-Komponente in den Magnetfeldsensorsignalen über einen Umlauf nicht konstant bei jedem Sensorpeak gleich hoch ist. Ist an diesem Rad sogar nur ein Magnet untergebracht, der sich nicht in der Nähe der Verformung durch den Seitenschlag befindet, kann ein "Achter" mit dem vorliegenden Verfahren unter Umständen auch nicht erkannt werden. Daher ist zu empfehlen, dass mehrere Magnete in dem zu beobachtenden Rad gleichmäßig auf den Umfang verteilt untergebracht werden sollen, um lokale Seitenschläge oder andere Beschädigung erfassen zu können. Um einen Seitenschlag bei der Erfassung der Drehung mittels mehrere Magnete zu erkennen, werden daher aufeinander folgende Magnetfeldsensorsignale miteinander verglichen. Dies kann dadurch geschehen, dass beispielsweise die Maximalwerte oder die Amplituden der Sensorsignale miteinander verglichen werden. Bei einem lokalen Seitenschlag werden daher nur ein oder zwei Peaks der durch die Magnete im Bereich des Seitenschlags hervorgerufenen Magnetfeldsensorsignale in z-Richtung einen ausreichend hohen Wert annehmen. Die übrigen Magnete werden keine oder nur eine geringe Bz-Komponente erzeugen. Daher kann ein weitere Vergleich der aufeinander folgenden Magnetfeldsensorsignale darin bestehen, dass bei wenigstens einem Umlauf des zu überwachenden Rades wenigstens ein einem Magnet zugeordnetes Magnetfeldsensorsignal eine ausreichend große Abweichung zu wenigstens einem anderen Magneten aufweist. Dies kann beispielsweise durch die Überschreitung eines zweiten Schwellenwerts SW2 erkannt werden. ZU bedenken ist, dass der zweite Schwellenwert SW2 geringer als der dritte Schwellenwert SW3 zu sein hat. Vorteilhafterweise werden dabei nicht die Magnetfeldsensorsignale zweier benachbarter angeordneter Magnete im Umlauf des Rades verwendet, es sei denn, es befinden sich nur zwei oder drei Magnete im überwachten Rad. Eine weitere Möglichkeit, einen Seitenschlag in Abhängigkeit des Auftretens einer Bz-Komponente in den Magnetfeldsensorsignalen zu erfassen besteht darin, die Bx-Komponente des zugehörigen Magnetfeldsensorsignals zu analysieren. So wird bei einem Seitenschlag nicht nur eine lokale Verschiebung des Rads in z-Richtung erzeugt sondern auch eine Verlängerung des Abstands d von Magnet zu Magnetsensors. Dieser Unterschied ist jedoch je nach Seitenschlag nur minimal, weswegen die Abweichungen in dem Magnetfeldsensorsignal in x-Richtung einen geringeren vierten Schwellenwert SW4 überschreiten müssen, um ebenfalls die Bedingung zur Erkennung des Seitenschlags zu liefern. Üblicherweise ist dabei der vierte Schwellenwert SW4 geringer als der zweite Schwellenwert SW2.

Auch eine falsche Radeinspannung, d.h. ein Versatz des Hinterrads zur Tretkurbel, lässt sich aus den erfassten Magnetfeldsensorsignale sowie dem Vergleich mit abgespeicherten Magnetfeldsensorsignale ableiten. Im Gegensatz zum Seitenschlag liegt hier jedoch eine nahezu konstante Bz-Komponente der Magnetfeldsensorsignale vor. Daher wird als Minimalanforderung zur Erkennung der falschen Radeinspannung die Überschreitung eines sechsten Schwellenwerts durch die Bz-Komponente angesehen. Weiterhin kann vorgesehen sein, dass das Rad sich nur minimal aus seiner Ebene heraus bewegt, um einen Seitenschlag ausschließen zu können. Daher ist eine weitere Anforderung zur Erkennung der falschen Radeinspannung, dass die Peaks, Maximalwerte oder die Amplituden der Magnetfeldsensorsignale nicht mehr als ein fünfter Schwellenwert SW5 voneinander abweichen.

In einer weiteren Ausgestaltung der Erfindung kann vorgesehen sein, dass zusätzliche Betriebs- und/oder Umfeldgrößen erfasst werden, um fehlerhafte Erzeugungen von Radfehlerinformationen zu vermeiden. So kann vorgesehen sein, eine Größe zu erfassen, die den Neigungswinkel des Zweirads oder dessen Lenkwinkel repräsentiert. Auch die optionale oder alternative Erfassung von Bodenbeschaffenheiten oder der Geschwindigkeit kann verwendet werden, um den Vergleich und die Ableitung der Radfehlerinformation zu verbessern. Es ist sogar möglich, dass das Verfahren zur Überwachung der Radbewegung bewusst bei ungünstigen Erfassungsbedingungen deaktiviert wird. So kann bei einer Downhill-Fahrt, bei dem die Räder durch die Beanspruchung durchaus kurzzeitig aus ihrer xy-Ebene herausgedrückt werden können, wenn sich das Rad zwischen Steinen verkeilt, zu einer falschen Radfehlerinformation führen.

Wie eingangs bereits ausgeführt, wird mit der vorliegenden Erfindung auch eine Vorrichtung zur Durchführung des Verfahrens sowie ein Zweirad, insbesondere ein Fahrrad mit einer derartigen Vorrichtung beansprucht. Um bei dem Zweirad sowohl das Vorderrad aus auch das Hinterrad zu überwachen, kann vorgesehen sein, dass jedes der Räder wenigstens einen Magneten aufweist. Der Magnetfeldsensor erfasst dabei die Magnetfeldstärke der Bewegung beider Magneten bei der Bewegung beider Räder. Durch eine geeignete Plausibilisierung der erfassten Magnetfeldsensorsignale lässt sich aus den Messgrößen eine Zuordnung der Magnetfeldsensorsignale zum Vorderrad oder dem Hinterrad ableiten.

Im einfachsten Fall kann das Verfahren die Zuordnung über die Magnetfeldstärke vornehmen, wenn der Abstand der Magnete des Vorder- und Hinterrads bei ansonsten gleichen Magnetfeldstärken der Magnete gegenüber dem Magnetsensor unterschiedlich ist. Aus den so unterschiedlich starken Magnetfeldsensorsignalen lässt sich eine Unterscheidung zwischen den Magneten im Vorderrad und Hinterrad ableiten. Der Fall einer Überlagerung beider Magnetfeldsensorsignale kommt nur in seltenen Betriebssituationen vor und ist zudem aufgrund der zusätzlichen Lenkbewegung des Vorderrads und dessen unterschiedliche Ablaufstrecke in Bezug auf das Hinterrad lediglich temporär. Nach einigen Umläufen beider Räder sind die Magnetfeldsensorsignale wieder unterscheidbar. Darüber hinaus ist bei dem Magnetfeldsensorsignal im Vorderrad bei Lenkbewegungen eine höhere Magnetfeldsensorkomponente in z-Richtung zu erkennen, so dass auch über diese Information eine Zuordnung erfolgen kann.

Eine weitere Möglichkeit der Zuordnung der Magnetfeldsensorsignale auf eines der beiden Räder besteht darin, die Magnetfeldstärke der Magneten zu individualisieren, so dass sie eine unterschiedliche Magnetfeldstärke oder ein unterschiedliches zeitlich aufgelöstes Magnetfeldsensorsignal am Ort des unbeweglichen Magnetfeldsensors erzeugen. Zur Unterscheidung könnte alternativ oder zusätzlich auch die Polarisation der Magnete im Vorder- und Hinterrad entgegen ausgerichtet sein. Weiterhin ist denkbar, die Geometrien der Magnete unterschiedlich zu gestalten, z.B. unterschiedlich breit oder lang, um über die Halbwertsbreite des Magnetfeldsensorsignals eine Aussage zur Zuordnung treffen zu können.

Der wenigstens eine Magnet kann dabei vorteilhafterweise im Außenbereich des drehenden Rades untergebracht sein, um die Distanz zum Magnetfeldsensor so gering wie möglich zu halten. Denkbar ist hier, den wenigstens einen Magneten am Mantel, in oder an der Felge oder im äußeren Bereich der Speichen anzubringen. Eine besondere Ausgestaltung ist dabei die Unterbringung am oder im Reifenventil.

Die Ausrichtung des wenigstens einen Magneten ist dabei vorteilhafterweise radial nach außen gerichtet. Dadurch wird dem Magnetfeldsensor die größte Magnetfeldstärke zugewandt. Es ist jedoch auch möglich, den Magneten in Umfangsrichtung in dem Rad unterzubringen.

Der Magnetsensor kann am oder im Rahmen, im Bereich der Tretkurbel, z.B. an einem Mittelmotor oder an einer Energiequelle für den Motor eines Elektrofahrrads angebracht sein.

Weitere Vorteile ergeben sich aus der nachfolgenden Beschreibung von Ausführungsbeispielen bzw. aus den abhängigen Patentansprüchen.

### Kurze Beschreibung der Zeichnungen

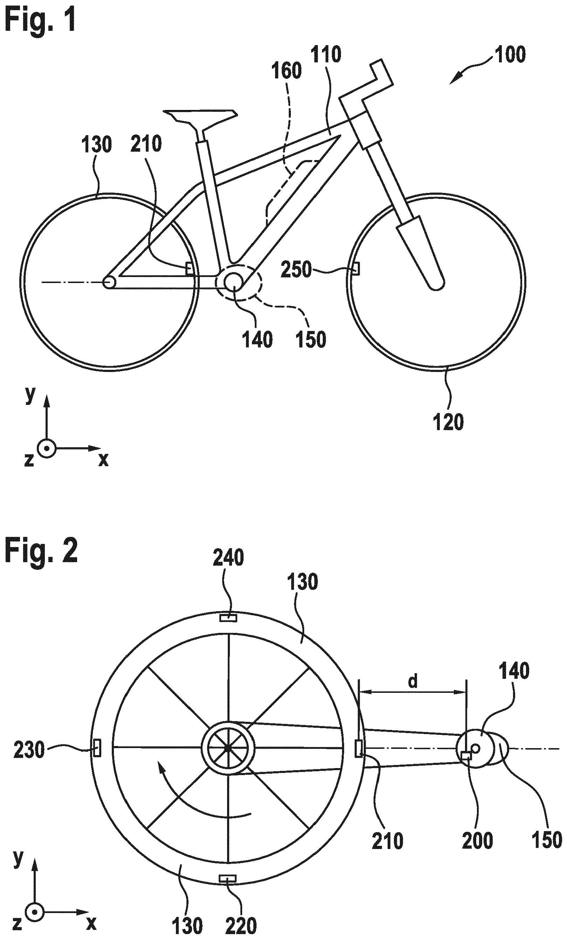

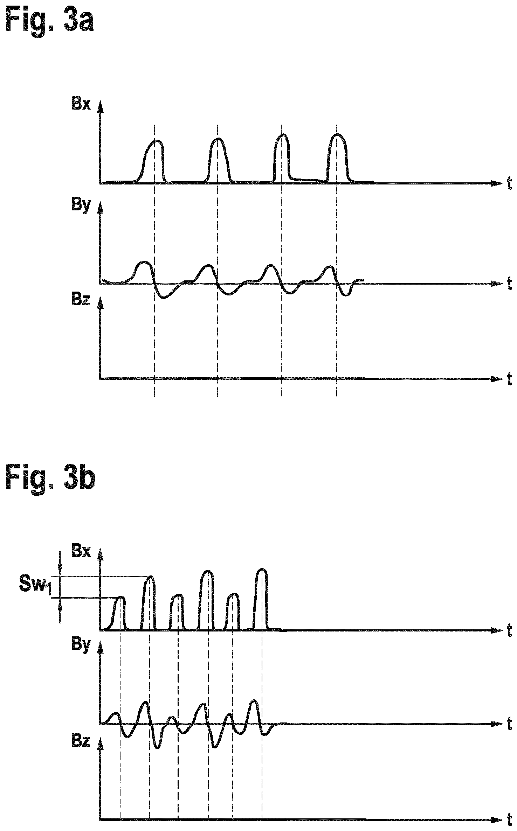

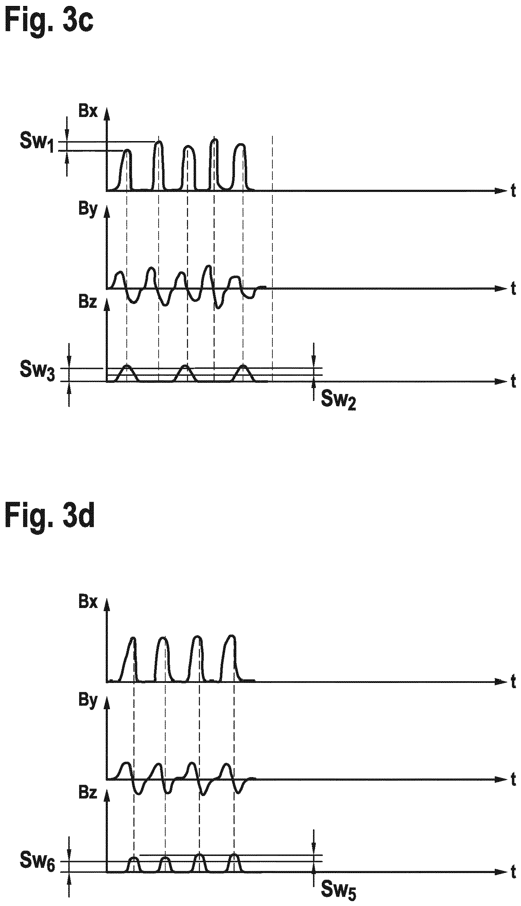

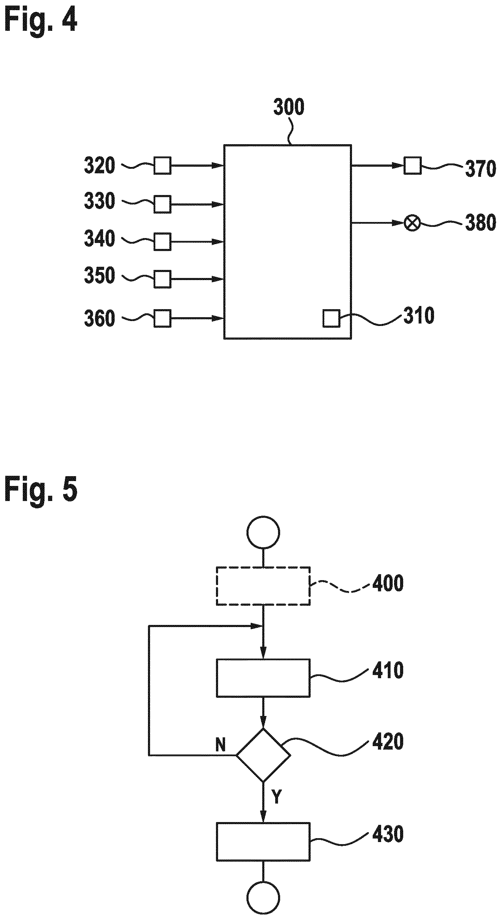

Figur 1 zeigt am Beispiel eines Elektrofahrrads ein Zweirad, an dem die Erfindung eingesetzt werden kann. Mit der Figur 2 wird eine Detailansicht des Elektrofahrrads dargestellt. Die Diagramme der Figur 3 zeigen beispielhaft die erfassten Magnetfeldsensorsignale in den drei Raumrichtungen. In der Figur 4 ist eine am Zweirad befestigbare Vorrichtung abgebildet, mit der das erfindungsgemäße Verfahren durchgeführt werden. Das Flussdiagramm zeigt ein mögliches Verfahren zur Erstellung von Kalibrierungsinformationen, welche für das erfindungsgemäße Verfahren benötigt werden. Mit der Figur 5 wird beispielhaft ein mögliches Ausführungsbeispiele des erfindungsgemäßen Verfahrens ebenfalls mittels eines Flussdiagramms gezeigt.

### Ausführungsbeispiel

Die Funktionsweise der beanspruchten Erfindung wird im Folgenden anhand eines Fahrrads beschrieben. Allgemein lässt sich die Erfindung jedoch auch an jedem anderen Zweirad, z.B. einem Motorrad oder einem Elektrofahrrad anwenden. Es ist sogar möglich, die Erfindung an einem einachsigen zweirädrigen Fahrzeug anzuwenden, z.B. einem Segway oder einem Kraftfahrzeug, z.B. einem Pkw oder Lkw.

Das Fahrrad 100 gemäß der Figur 1 ist mit einem Rahmen 110, bestehend aus Unterrohr, einem Sattelrohr und einem Oberrohr ausgestattet. Weiterhin weist es eine Tretkurbeleinheit 140 auf, die ein Hinterrad 130 als Antriebs- oder auch Laufrad antreibt. Das Vorderrad 120 dient über den Lenker als Steuerrad, um die Richtung der Bewegung des Fahrrads über einen Lenkwinkel vorzugeben.

Weiterhin kann an dem Fahrrad 100 eine Antriebseinheit 150 vorgesehen sein, z.B. ein Motor. An dem Fahrrad 100 gemäß der Figur 1 ist diese Antriebseinheit 150 im Bereich der Tretkurbeleinheit 140 angeordnet, jedoch kann diese auch in dem Rahmen 110 selbst oder an einem der beiden Räder 120 bzw. 130 angebracht sein. Eine entsprechende Energiequelle 160 kann dabei sowohl am oder im Rahmen 110 sowie am nicht gezeigten Gepäckträger untergebracht sein.

In der Figur 2 ist beispielhaft das Hinterrad 130 mit der Tretkurbeleinheit 140 dargestellt, um die Funktionsweise der Erfindung deutlich zu machen. Statt einer einfachen Tretkurbeleinheit 140, bei der lediglich der Radfahrer den Antrieb des Fahrrads 100 mittels der Betätigung der Tretkurbeln aufbringt, kann diese auch mit der Antriebseinheit 150 kombiniert sein. Mittels dieser kombinierten Tretkurbel-/Antriebseinheit kann dann der Antrieb bzw. Vortrieb des Fahrrads 100 ganz oder teilweise mittels Motorkraft oder Muskelkraft erzeugt werden.

Am Hinterrad 130 ist wenigstens ein Magnet 210 angeordnet, der sich bei der drehenden Bewegung des angetriebenen Hinterrades 130 mit dreht. In einer ersten Variante ist der Magnet 210 mit seiner Nord-Süd-Richtung radial nach außen am Hinterrad 130 befestigt. Der Vorteil bei dieser Anordnung besteht darin, dass ein stärkeres Magnetfeld radial nach Außen erzeugt wird, welches von einem Magnetsensor 200 deutlicher erfasst werden kann. Die konkrete Ausrichtung des Nordpols oder des Südpols nach außen spielt für das erfindungsgemäße Verfahren zunächst jedoch keine Rolle. In einer zweiten, alternativen Variante kann der Magnet 210 mit seiner Nord-Süd-Richtung auch in Umfangsrichtung angeordnet werden. Generell sollte der Magnet im äußeren Bereich des Hinterrads 130 angeordnet sein. Dies kann dadurch realisiert werden, dass der Magnet 210 am oder im Mantel untergebracht ist. Alternativ kann der Magnet 210 jedoch auch an oder in der Felge angebracht sein. Letzteres hätte den Vorteil, dass der Magnet 210 einem geringeren Verschleiß unterliegt, da er gegenüber der Fahrbahn und der Verwalkung des Mantels geschützt ist. Optional kann vorgesehen sein, mehrere Magnete 210 im oder am Hinterrad 130 anzubringen. Hierdurch kann schneller auf die Auslenkung des Hinterrads 130 geschlossen werden, da kein vollständiger Umlauf des Rads notwendig ist, um die Bewegung zu detektieren. Voraussetzung ist hierbei jedoch, dass die Magnete 210 in gleicher Nord-Süd-Ausrichtung radial oder bezüglich des Umfangs eingebaut werden. Entsprechendes gilt für den oder die Magnete am oder im Vorderrad 120.

Der Magnetsensor 200, der die Bewegung des Magneten 210 detektiert, ist im Ausführungsbeispiel gemäß der Figur 2 in der Nähe der Tretkurbeleinheit 150 angebracht, z.B. in oder an dem Gehäuse der Antriebseinheit 140. Dies hat den Vorteil, dass der Magnetsensor 200 eine geringe räumliche Nähe zum Magneten 210 am Hinterrad 130 mit dem Abstand d aufweist und somit die Erfassung des Magnetfelds erleichtert wird. Gleichzeitig oder alternativ kann der so angebrachte Magnetsensor 200 auch das Magnetfeld eines am Vorderrad 120 angebrachten Magneten 250 erfassen. Um die von verschiedenen bewegten Magnete 210 und 250 am Vorderrad 120 und Hinterrad 130 erzeugten Magnetfelder zu unterscheiden, ist es jedoch notwendig, die Magnetfeldsensorsignale eindeutig den entsprechend palzierten Magneten 210 und 250 zuzuordnen. Neben der vorstehend beschriebenen Anordnung des Magnetsensors 200 kann jedoch auch vorgesehen sein, dass dieser am Rahmen 110, z.B. am Unterrohr, am oder im Akkumulator 160 oder am (nicht abgebildeten) Gepäckträger des Fahrrads 100 angebracht sein kann. Die Anordnung bzw. Kopplung des Magnetsensors 200 an den Rahmen 110 ist dabei derart vorgesehen, dass beide eine unbewegliche Einheit zueinander bilden und somit ortsfest sind. Durch die (mechanische) Fixierung des Magnetsensors 200 an den Rahmen 110 kann somit eine relative Bewegung der Magnete 210 bzw. 250 zum Rahmen 110 erfasst werden.

Mit einem geeigneten Magnetsensor 200 kann die Bewegung des Magneten 210 an der Hinterachse 130 gleichzeitig in mehreren Richtungen erfasst werden. So ist zunächst die Erfassung des Magnetfelds des Magneten 210 in Bewegungsrichtung des Fahrrads 100, d.h. in x-Richtung gewünscht, um die Annährung bzw. Entfernung des Magneten 210 bei einem Umlauf des Hinterrads 130 bzw. des Laufrads zu erfassen. Typischerweise wird dabei das Magnetfeld des Magneten 210 nicht während des gesamtem Umlaufs erfasst, sondern ab einer Detektionsgrenze des Magnetsensors 200, die durch sein Auflösungsvermögen bestimmt wird, bis zur maximal erfassbaren Magnetfeldstärke im geringsten Abstand d zum Magnetsensor 200. Weiterhin kann auch die Bewegung des Magneten 210 in senkrechter y-Richtung, d.h. in Bewegungsrichtung des Rades in Richtung der Hochachse des Fahrrads erfasst werden. Mit diesen beiden Richtungen kann die Bewegung des Rades in der xy-Ebene nachverfolgt werden. Auch die Bewegung des Magneten 210 in z-Richtung, d.h. zur Querrichtung des Fahrrads 100 kann erfasst werden. Aus diesen Sensorsignalen in z-Richtung, gegebenenfalls in Verbindung mit den Sensorsignalen in zumindest einer anderen Richtung, können sich beim Hinterrad 130 Verformungen des Rades ableiten lassen, wie beispielsweise einen Höhenschlag oder einen Seitenschlag. Beim Vorderrad 120 lässt sich über die Erfassung der z-Richtung des entsprechenden Magnetsensorsignals darüber hinaus die Lenkrichtung ableiten.

Um die gewünschten Magnetfeldsensorsignale zu erfassen, ist wenigstens ein Magnetfeldsensor 200 notwendig, der die absolute Magnetfeldstärke oder eine gerichtete Magnetfeldstärke erfasst. Bevorzugt wird dabei die Erfassung in Richtung der x-Richtung, da über die Annäherung des Magneten 210 an den Magnetfeldsensor 200 eine Aussage zumindest über die Drehgeschwindigkeit des Hinterrads 130 und somit die Fortbewegungsgeschwindigkeit des Fahrrads 100 getroffen werden kann. Das Magnetfeldsensorsignal in y- und/oder z-Richtung kann weiterhin sowohl mit verschiedenen Magnetfeldsensoren erfasst werden, die ebenfalls spezifisch auf eine Richtung ausgerichtet sind. Alternativ kann aber auch ein Magnetfeldsensor verwendet werden, der das Magnetfeldsensorsignal in wenigstens zwei Raumrichtung erfasst und auflöst. Bevorzugt wird ein kombinierter 3D Magnetfeldsensor eingesetzt. Dieser 3D Magnetfeldsensor kann darüber hinaus mit einem Beschleunigungssensor oder einem Gierratensensor kombiniert sein.

Durch die Erfassung wenigstens einer spezifischen Richtung des Magnetfeldsensorsignals des wenigstens einen bewegten Magneten im überwachten Rad können verschiedene Fehlerzustände der Drehbewegung des Rades überwacht und erkannt werden. Entsprechende zeitliche Verläufe der von einem Magnetfeldsensor als Magnetfeldsensorsignale erfassten Magnetfeldstärken in verschiedenen Raumrichtungen sind in den Diagrammen der Figuren 3a bis 3c dargestellt.

Das Diagramm der Figur 3a stellt eine Drehbewegung eines in Richtung der Speichen nach außen polarisierten Magneten 210 im überwachten Rad 120 bzw. 130 im Idealzustand dar. Die Bewegung des Rades und somit die des mitgeführten Magneten 210 spielt sich in der xy-Ebene ab. Hierbei ist vorausgesetzt, dass der Magnet 210 mittig in Bezug auf die Lauffläche des Rades angeordnet ist, weswegen keine Magnetfeldkomponente Bz in Querrichtung z des Zweirads erfasst wird. Für den Fall, dass der Magnet außerhalb zur Mitte der Lauffläche angeordnet ist, z.B. am Mantelrand, so ist eine kleine Bz-Komponente bei der Annährung des Magneten 201 an den Magnetsensor 200 im Magnetsensorsignal zu erwarten. Bei dieser idealen Bewegung in der xy-Ebene erfasst der Magnetsensor 200 lediglich Magnetfeldstärken in x-Richtung, die zunehmen und wieder abnehmen, sowie Magnetfeldstärken mit positivem und negativem Anteil in y-Richtung aufgrund der unterschiedlichen Ausrichtung der Magnetfeldlinien auf beiden Seiten des Magneten 210.

Im Diagramm der Figur 3b ist hingegen ein typischer Verlauf eines Magnetfeldsensorsignals aufgetragen, bei dem das zugehörige Rad wenigstens zwei (oder vier) Magnete und einen Höhenschlag aufweist. Bei diesem Höhenschlag ist das Rad oval verformt, so dass z.B. die Magneten 210 und 230 näher an den Magnetsensor 200 herankommen als die Magnete 220 und 240. Entsprechend ist in der Bx-Komponenten des Magnetsensorsignals ein deutlicher Unterschied beim Umlauf des Rades zwischen den Sensorsignalen der Magnete zu erkennen. Zwar ist auch in der By-Komponenten eine Veränderung zu sehen, jedoch ist diese nicht so deutlich ausgeprägt wie in der Bx-Komponenten. Bei einem reinen Höhenschlag ist dagegen in der Bz-Komponenten (außer einem Versatz bei der Platzierung des Magneten) kein nennenswerten Anteil des Magnetfeldsensorsignals zu erkennen. Durch einen Vergleich der maximalen Amplitudenwerte bzw. der Peakhöhen der Bx-Komponente mit zuvor erfassten und abgespeicherten Magnetfeldsensorwerten bzw. mit einer Eichmessung (siehe Figur 3a) lässt sich bei Überschreitung einer Abweichung um wenigstens den Schwellenwert SW1 ein Höhenschlag erkennen.

Entsprechend lässt sich auch ein Seitenschlag im überwachten Rad erkennen. Hierzu ist im Diagramm der Figur 3c dargestellt, dass im Bereich des Seitenschlags das Rad in die z-Richtung herausgebogen ist und somit eine Bz-Komponente im Magnetfeldsensorsignal zeigt. Auch bei dieser Darstellung ist vorgesehen, dass wenigstens zwei Magnete am überwachten Rad angebracht sind, um die lokale Schädigung durch den Seitenschlag erfassen zu können. Ein erstes Indiz für einen Seitenschlag kann dabei die Überschreitung eines dritten Schwellenwerts SW3 durch den maximalen Amplitudenwert bzw. der Peakhöhe der Bz-Komponente des Magnetfeldsensorsignals sein. Um eine Abgrenzung zur noch in der Figur 3d aufzuzeigenden falschen Radeinspannung zu erhalten, sollte zusätzlich überprüft werden, ob die Veränderung nachfolgender Magnetfeldsensorsignale wenigstens eine Abweichung in der Größe eines zweiten Schwellenwerts SW2 zeigen. Alternativ oder optional kann auch überprüft werden, ob die Messsignale der Bx-Komponente eine Schwankung aufweisen. Hierbei kann ein Mindestschwankung in der Größe eines vierten Schwellenwerts SW4 geprüft werden.

Bei der Erfassung von Magnetfeldsensorsignalen sowohl eines Magneten am Vorderrad 120 als auch am Hinterrad 130 ist erforderlich, dass die erfassten Messwerte eindeutig den entsprechenden Magneten zugeordnet werden, um eine Zuordnung der Information für das Vorder- oder Hinterrad zu ermöglichen. Dies kann dadurch erreicht werden, dass die Magnete im Vorderrad und Hinterrad unterschiedlich gestaltet sind, so dass sich die Messwerte der Magnetfeldstärke voneinander separieren lassen. So ist denkbar, jeweils unterschiedliche minimale Abstände zwischen den Magneten und dem Magnetfeldsensor vorzusehen. Eine weitere Möglichkeit, unterschiedliche Sensorsignale zu erzeugen besteht darin, die Magnete unterschiedlich stark auszulegen oder die Geometrien zu variieren. So würden längere oder breitere Magnete entsprechend breitere Messwertsignalverläufe erzeugen. Auch die unterschiedliche Polarisation der Magnete im Vorder- und Hinterrad würde eine eindeutige Zuordnung im Messwertsignalverlauf erzeugen.

Entsprechend könnte man auch bei der Verwendung von mehreren Magneten in den Rädern vorgehen, um die zeitliche Auflösung bzw. schnellere Ableitung von Veränderungen zu erkennen. Hier ist beispielsweise auch denkbar, jeweils einen der mehreren Magneten in einem Rad bewusst anders zu gestalten, um einen vollständigen Umlauf und ggf. eine Normierung erzeugen zu können, gerade bei der Verwendung einer unbekannten Anzahl von Magneten. Ansonsten kann selbstverständlich auch über die Kenntnis der Anzahl der Magnete auf einen vollständigen Umlauf geschlossen werden.

In der Figur 4 wird anhand eines Blockschaltbilds eine mögliche Vorrichtung zur Realisierung der Erfindung dargestellt, z.B. in Form eines Steuergeräts, welches am Zweirad angeordnet ist. Kernstück dieser Vorrichtung ist eine Auswerteeinheit 300 bzw. eine damit kombinierte Steuereinheit, die mit einem Speicher 310 ausgestattet ist. Die Auswerteeinheit 300 erfasst mittels eines Magnetsensors entsprechende Messwerte der Magnetfeldstärke des sich bewegenden wenigstens einen Magneten im Rad. Bei diesem Magnetfeldsensor kann es sich dabei um einen Sensor handeln, der die Magnetfeldstärke in einer, zwei oder allen drei Raumrichtungen erfasste. In der Figur 4 ist die Erfassung der Magnetfeldstärkekomponenten Bx, By und Bz in den drei Raumrichtungen x, y und z jeweils getrennt dargestellt, um die Möglichkeit aufzuzeigen, dass jeweils ein separater Magnetsensor 320, 330 und 340 die einzelnen Magnetfeldstärkesignale in den Raumrichtungen x, y und z erfasst. Vorteilhafterweise werden jedoch alle drei Magnetfeldkomponenten durch einen einzelnen Sensor erfasst. Weiterhin ist vorgesehen, dass die Auswerteeinheit 300 die Sensorsignale wenigstens eines weiteren Sensors 350 erfasst. Dieser Sensor 350 kann ein Neigungssensor, ein Lenkwinkelsensor und/oder ein Geschwindigkeitssensor darstellen. Für die Aktivierung des erfindungsgemäßen Verfahrens sowie optional auch zum Start einer Kalibrierungsroutine ist die Abfrage eines manuellen oder automatischen Schalters 360 vorgesehen.

Erkennt die Auswerteinheit 300 auf der Basis der erfassten Magnetfeldsensorsignale eine fehlerhafte Bewegung des überwachten Rades bzw. der überwachten Räder, kann der Fahrer des Zweirads über eine entsprechende Informationseinheit 380 optisch oder akustisch über die Radfehlerinformation informiert werden. Die Informationseinheit kann dabei ein Display, ein Navigationsgerät oder ein Smartphone sein. Der Fahrer hat anschließend aufgrund der Radfehlerinformation die Möglichkeit, das Rad zu reparieren oder es auszutauschen. Weiterhin kann die Radfehlerinformation dazu genutzt werden, an eine weitere Verarbeitungseinheit 370 weiter geleitet zu werden, um entsprechenden Gegenmaßnahmen oder Abhilfe zu schaffen. Denkbar ist beispielsweise, dass die Ansteuerung des Motors des Zweirads in bestimmten Betriebssituationen geändert wird. Es kann jedoch auch vorgesehen sein, dass die Radaufhängung automatisch angepasst wird.

Im Flussdiagramm der Figur 5 wird beispielhaft eine mögliche Kalibrierung des Systems zur Erfassung entsprechender Vergleichswerte dargestellt. Hierbei werden in einem ersten Schritt 410 Magnetfeldsensorsignale erfasst, die wenigstens zwei Raumrichtungen der Magnetfeldstärkekomponenten Bx, By und Bz aufweisen. Vorteilhafterweise wird dabei wenigstens ein kompletter Umlauf des zu überwachenden Rades erfasst. Um wenigstens einen Höhenschlag oder Seitenschlag als häufigsten Defekt eines Rades zu erfassen, wäre hier zumindest die Erfassung der Bx und Bz-Komponente erforderlich. Im nächsten Schritt 420 wird geprüft, ob die erfassten Signale für eine Kalibrierung ausreichen. So könnte beispielsweise bei schwankenden Werten der Signalamplituden bzw. Peakmaxima davon ausgegangen werden, dass Sonderbedingungen vorliegen, die weitere Messungen erfordern. In diesem Fall wird der Schritt 410 erneut durchlaufen. Es kann jedoch auch von vorneherein vorgesehen sein, dass mehrere Umläufe erfasst werden und erst bei einer Mittelung über diese mehreren Umläufe ausreichend valide Daten für eine Kalibrierung vorliegen. Diese Kalibrierungsdaten werden dann im nachfolgenden Schritt 430 im Speicher 310 abgespeichert, so dass sie für das eigentliche erfindungsgemäße Verfahren zur Verfügung stehen.

Optional kann vorgeschaltet ein Schritt 400 vorgesehen sein, der den Kalibrierungsvorgang mit Schritt 410 erst dann startet, wenn der Fahrer die Kalibrierung initiiert oder ein System diese Kalibrierung automatisch startet. Durch diese bewusste manuelle oder automatische Initiierung des Kalibrierungsvorgangs kann sichergestellt werden, dass die Vergleichswerte durch die Kalibrierung nur im einwandfreien Zustand des Zweirads sowie einem Soll-Bewegungsverhalten der Drehung des Rads erzeugt werden. Günstige Zeitpunkte hierzu wären beispielsweise nach der Erstmontage des Zweirads oder nach einer bewusst durchgeführten Reparatur.

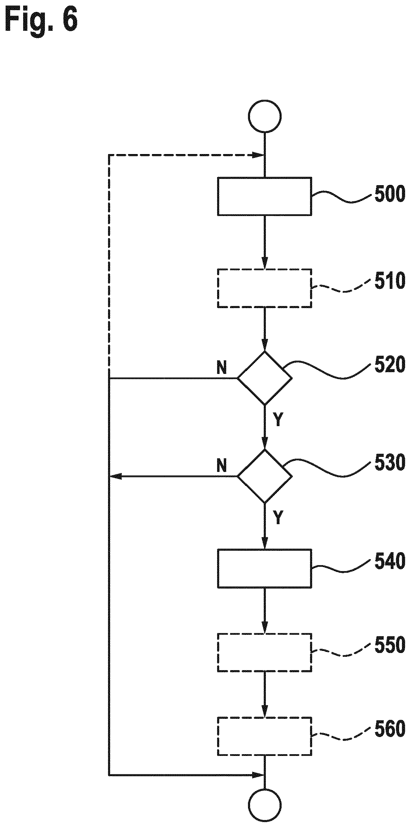

Das Flussdiagramm der Figur 6 zeigt das erfindungsgemäße Verfahren, ebenfalls in Form eines Flussdiagramms. Im ersten Schritt 500 werden aktuelle Magnetfeldsensorsignale erfasste, die die Bewegung des wenigstens einen Magneten in dem wenigstens einen überwachten Rad repräsentieren. Hierbei können die Magnetfeldsensorkomponenten Bx, By und Bz wie vorstehend beschrieben einzeln oder in Kombination erfasst werden. Für die spätere Auswertung und Erkennung eines Fehler in der Bewegung des Rads ist wenigstens die Erfassung zweier Raumkomponenten der Magnetfeldstärke notwendig. Hierzu könnten beispielsweise die Magnetfeldkomponenten Bx und Bz erfasst werden. Um eine aussagekräftige Messung zu erhalten, wird vorteilhafterweise wenigstens ein Umlauf des Rades erfasst. Es kann auch vorgesehen sein, dass mehrere Umläufe erfasst werden und die Ergebnisse gemittelt werden, um Ausreißer oder Fehlmessungen durch die Beeinflussung externe Magnetfelder auszuschließen. Die Erfassung der Magnetfeldsensorsignale während mehrerer Umläufe hat auch den Vorteil, dass gegebenenfalls eine Unterscheidung zwischen den Magnetfeldsensorsignale des wenigstens einen Magneten im Vorderrad und Hinterrad möglich ist, da es hier bei Lenkbewegungen zu einer zeitlichen Verschiebung der Messsignale kommt. Bei der Verwendung von mehreren Magneten im überwachten Rad kann es dagegen ausreichend sein, wenige aufeinander folgende Messsignale zu erfassen, um eine valide Aussage über einen Fehler in der Drehung des Rades zu erhalten.

Im den nachfolgenden Schritten 520 bzw. 530 erfolgt anschließend ein Vergleich der erfassten Magnetfeldsensorsignale mit zuvor abgespeicherten Vergleichswerten der Magnetfeldsensorsignalen. Bei den abgespeicherten Vergleichswerten kann es sich dabei um Kalibrierungswerte handeln (siehe das Verfahren zur Figur 5) oder um zuvor erfasste Magnetfeldsensorsignale. Die Ableitung der Radfehlerinformation aus den erfassten Magnetfeldsensorsignalen mit einem Vergleich der abgespeicherten Vergleichswerten kann dabei sowohl in einem Schritt oder in zwei getrennten Schritten 520 bzw. 530 ablaufen. Zur Verdeutlichung des Verfahrens ist der Vergleich im vorliegenden Flussdiagramm in einen Schritt 520 aufgeteilt, in dem generell erkannt wird, ob eine Abweichung zwischen den erfassten Magnetfeldsensorsignalen und abgespeicherten Vergleichswerten vorliegt. Ist das nicht der Fall kann das Verfahren erneut mit Schritt 500 durchlaufen oder beendet werden. Im Schritt 530 wird daraufhin konkret abgeleitet, welche Art der Radfehlerinformation vorliegt. Wie bereits zu den Figuren 3b bis d beschrieben wurde, kann aufgrund des Verhaltens der Magnetfeldsensorsignale auf einen Höhenschlag, auf einen Seitenschlag oder eine falsche Radeinspannung geschlossen werden. Hierzu sind verschiedene Vergleiche der einzelnen Magnetfeldsensorkomponenten mit Schwellenwerten notwendig. Kann im Schritt 530 jedoch keine eindeutige Zuordnung zu einer der Fehlerzustände abgeleitet werden, kann das Verfahren ebenfalls wieder mit Schritt 500 durchlaufen oder beendet werden. Im nächsten Schritt 540 nach dem Vergleich wird die Radfehlerinformation erzeugt und optional an den Fahrer im Schritt 550 weitergeleitet. Eine weitere Option besteht darin, dass im nachfolgenden Schritt 560 ein ausgleichendes System angesteuert wird, welche den Radfehler bzw. die fehlerhafte Drehbewegung des überwachten Rades kompensiert oder automatisch repariert.

In einer weiteren Ausführungsform der Erfindung können vor dem Vergleich im Schritt 520 bzw. 530 weitere fahrdynamische Größen des Betriebs des Zweirads erfasst werden. Hier könnte beispielsweise die Neigung, Steigung, der Lenkwinkel und/oder die Geschwindigkeit des Zweirads erfasst werden. Alle diese Größen haben durchaus ebenfalls Auswirkungen auf eine Verformung des überwachten Rades. Daher kann im Schritt 520 in Abhängigkeit dieser Größen erkannt werden, inwieweit tatsächlich eine Situation zur Erkennung einer fehlerhaften Radbewegung vorliegt. Alternativ können im Schritt 530 die fahrdynamischen Größen herangezogen werden, um die Erkennung und Ableitung der fehlerhaften Drehung des zu überwachenden Rades zu konkretisieren oder zu plausibilisieren.

## Patentansprüche

1. Verfahren zur Überwachung des Bewegungsverhaltens wenigstens eines Rades (120, 130) eines Zweirads (100), insbesondere eines Fahrrads, wobei das Zweirad (100) einen dem Rahmen (110) zugeordneten Magnetfeldsensor (200) und wenigstens ein Rad (120, 130) mit wenigstens einem Magneten (210, 220, 230, 240, 250) aufweist, wobei zur Überwachung
• in Abhängigkeit der Drehbewegung des wenigstens einen Rades Magnetfeldsensorsignale des wenigstens einen Magneten (210, 220, 230, 240, 250) in wenigstens zwei Raumrichtungen erfasst (500) werden, und
• ein Vergleich (520, 530) der Magnetfeldsensorsignale mit abgespeicherten Magnetfeldsensorsignalen erfolgt, und
• eine Radfehlerinformation in Abhängigkeit des Vergleichs (530) erzeugt (540) wird, falls die Abweichung in wenigstens einer Raumrichtung einen vorgegebenen Schwellenwert (SW1, SW2, SW3, SW4, SW5) übersteigt.

2. Verfahren nach Anspruch 1, **dadurch gekennzeichnet, dass** die Magnetfeldsensorsignale die Magnetfeldkomponente (Bx, By, Bz) des bewegten Magneten (210, 220, 230, 240, 250) in Richtung der Bewegungsrichtung (x), der Hochachse (y) und/oder der Querrichtung (z) des Zweirads (100) repräsentieren.

3. Verfahren nach einem der vorhergehenden Ansprüche, **dadurch gekennzeichnet, dass** die Magnetfeldsensorsignale während wenigstens eines Umlaufs des Rades (120, 130) erfasst und für den Vergleich (520, 530) verwendet werden.

4. Verfahren nach einem der vorgehenden Ansprüche, **dadurch gekennzeichnet, dass** die abgespeicherten Magnetfeldsensorsignale eine fehlerfreie Radbewegung in der Radaufhängung des Zweirads (100) repräsentieren.

5. Verfahren nach einem der vorgehenden Ansprüche 1 bis 3, **dadurch gekennzeichnet, dass** die abgespeicherten Magnetfeldsensorsignale die Magnetfeldsensorsignale eines vorherigen Erfassungsvorgangs repräsentieren, wobei insbesondere vorgesehen ist, dass die abgespeicherten Magnetfeldsensorsignal die während des vorherigen Umlaufs des Rades (120, 130) erfassten Magnetfeldsensorsignale repräsentieren.

6. Verfahren nach einem der vorhergehenden Ansprüche 1 bis 5, **dadurch gekennzeichnet, dass** die Radfehlerinformation einen Höhenschlag des Rades (120, 130) repräsentiert, falls die Abweichung der Magnetfeldsensorsignale in Bewegungsrichtung (x) und/oder in Richtung der Hochachse (y) des Zweirads (100) größer als ein vorgegebener erster Schwellenwert (SW1) ist.

7. Verfahren nach einem der vorhergehenden Ansprüche 1 bis 6, **dadurch gekennzeichnet, dass** die Radfehlerinformation einen Seitenschlag des Rades (120, 130) repräsentiert, falls die Abweichung der Amplituden der, insbesondere aufeinander folgender, Magnetfeldsensorsignale (Bz) in Querrichtung (z) des Zweirads (100) wenigstens größer als ein zweiter vorgegebener Schwellenwert (SW2) ist und wenigstens teilweise größer als ein vorgegebener dritter Schwellenwert (SW3) ist, wobei vorgesehen ist, dass der der dritte Schwellenwert (SW3) größer als der zweite Schwellenwert (SW2) ist.

8. Verfahren nach Anspruch 7, **dadurch gekennzeichnet, dass** die Radfehlerinformation einen Seitenschlag des Rades (120, 130) repräsentiert, falls zusätzlich die Abweichung der Amplituden der, insbesondere aufeinander folgender, Magnetfeldsensorsignale (Bx, By) in Bewegungsrichtung (x) und/oder in Richtung der Hochachse (y) des Zweirads (100) größer als ein vorgegebener vierter Schwellenwert (SW4) ist, wobei vorgesehen ist, dass der der vierter Schwellenwert (SW4) kleiner als der zweite Schwellenwert (SW2) ist.

9. Verfahren nach einem der vorhergehenden Ansprüche 1 bis 8, **dadurch gekennzeichnet, dass** die Radfehlerinformation eine falsche Radeinspannung des Rades (120, 130) repräsentiert, falls die Abweichung der Amplituden der, insbesondere aufeinander folgender, Magnetfeldsensorsignale (Bz) in Querrichtung (z) des Zweirads (100) wenigstens geringer als ein fünfter vorgegebener Schwellenwert (SW5) ist, jedoch größer als einen vorgegebener sechster Schwellenwert (SW6) ist, wobei vorgesehen ist, dass der der sechste Schwellenwert (SW6) größer als der fünfte Schwellenwert (SW5) ist.

10. Verfahren nach einem der vorhergehenden Ansprüche 1 bis 9, **dadurch gekennzeichnet, dass**
• zusätzlich eine Betriebsgröße des Zweirads (100) erfasst (510) wird, insbesondere eine Größe, die den Neigungswinkel des Zweirads (100) oder den Lenkwinkel repräsentiert, und
• die Radfehlerinformation zusätzlich in Abhängigkeit der erfassten Betriebsgröße erzeugt (540) wird.

11. Vorrichtung (300) zur Überwachung des Bewegungsverhaltens wenigstens eines Rades (120, 130) eines Zweirads (100), insbesondere eines Fahrrads, mit einem Verfahren gemäß der Ansprüche 1 bis 10, wobei das Zweirad (100) einen dem Rahmen (110) zugeordneten Magnetfeldsensor (200) und wenigstens ein Rad (120, 130) mit wenigstens einem Magneten (210, 220, 230, 240, 250) aufweist, wobei die Vorrichtung (300) zur Überwachung
• in Abhängigkeit der Drehbewegung des wenigstens einen Rades (120, 130) mittels des Magnetfeldsensors (200) Magnetfeldsensorsignale des wenigstens einen Magneten (210) in wenigstens zwei Raumrichtungen erfasst, und
• einen Vergleich der Magnetfeldsensorsignale mit abgespeicherten Magnetfeldsensorsignalen durchführt, und
• eine Radfehlerinformation in Abhängigkeit des Vergleichs erzeugt, falls die Abweichung in wenigstens einer Raumrichtung einen vorgegebenen Schwellenwert übersteigt.

12. Vorrichtung (300) nach Anspruch 11, **dadurch gekennzeichnet, dass** das Zweirad (100) ein Vorderrad (120) und ein Hinterrad (130) mit jeweils wenigstens einem Magneten (210, 250) aufweist, wobei die Vorrichtung in Abhängigkeit einer Auswertung der Magnetfeldsensorsignale zusätzlich zur Radfehlerinformation eine Zuordnung zum Vorderrad (120) oder Hinterrad (130) ausgibt.

13. Zweirad (100), insbesondere ein Fahrrad, mit einer Vorrichtung (300) nach Anspruch 11 oder 12, welche ein Verfahren nach einem der Ansprüche 1 bis 10 durchführt, wobei das Zweirad (100) einen dem Rahmen (110) zugeordneten Magnetfeldsensor (200) und wenigstens ein Rad (120, 130) mit wenigstens einem Magneten (210, 220, 230, 240, 250) aufweist, wobei die Vorrichtung (300) zur Überwachung
• in Abhängigkeit der Drehbewegung des wenigstens einen Rades (120, 130) mittels des Magnetfeldsensors (200) Magnetfeldsensorsignale des wenigstens einen Magneten (210) in wenigstens zwei Raumrichtungen erfasst, und
• einen Vergleich der Magnetfeldsensorsignale mit abgespeicherten Magnetfeldsensorsignalen durchführt, und
• eine Radfehlerinformation in Abhängigkeit des Vergleichs erzeugt, falls die Abweichung in wenigstens einer Raumrichtung einen vorgegebenen Schwellenwert (SW1, SW2, SW3, SW4, SW5) übersteigt.

14. Zweirad (100) nach Anspruch 13, **dadurch gekennzeichnet, dass** der wenigstens eine Magnet (210, 220, 230, 240, 250) im Außenbereich des Rades (120, 130) untergebracht ist, insbesondere in oder an der Felge.

15. Zweirad (100) nach einem der Ansprüche 13 oder 14, **dadurch gekennzeichnet, dass** die Ausrichtung des wenigstens einen Magneten (210, 220, 230, 240, 250) radial erfolgt.

16. Zweirad (100) nach einem der Ansprüche 13 bis 15, **dadurch gekennzeichnet, dass** in dem wenigstens einen Rad (120, 130) wenigstens zwei Magnete (210, 220, 230, 240, 250) angeordnet sind, wobei insbesondere vorgesehen sind, dass die Magnete (210, 220, 230, 240, 250) gleichmäßig auf dem Umfang des Rades (120, 130) verteilt sind.

17. Zweirad (100) nach einem der Ansprüche 13 bis 16, **dadurch gekennzeichnet, dass** sowohl im Vorderrad (120) als auch im Hinterrad (130) des Zweirads (100) wenigstens jeweils ein Magnet (210, 220, 230, 240, 250) angeordnet ist, wobei vorgesehen ist, dass sich die Magnete (210, 220, 230, 240, 250) im Vorderrad (120) und im Hinterrad (130) hinsichtlich ihrer Umfangslänge, Breite, magnetischen Stärke oder magnetischer Polarisation unterscheiden.

18. Zweirad (100) nach einem der Ansprüche 13 bis 17, **dadurch gekennzeichnet, dass** der Magnetfeldsensor (200) im oder am Motor (145) angeordnet ist.

19. Zweirad (100) nach einem der Ansprüche 13 bis 18 **dadurch gekennzeichnet, dass** der Magnetfeldsensor (200) die Erfassung der Magnetfeldkomponenten (Bx, By, Bz) in allen drei Raumrichtungen (x, y, z) ermöglicht.
